# EUROPEAN PATENT SPECIFICATION

(11) **EP 0 409 050 B1**
(45) Date of publication and mention of the grant of the patent: **02.02.1994**
(21) Application number: 90113150.8
(22) Date of filing: 10.07.1990
(51) Int. Cl.: B24B 41/04, B24D 5/16

(54) **Rotating mass dynamic balancing device in particular for grinding wheels**
Vorrichtung zum Auswuchten einer sich drehenden Masse, insbesondere für Schleifscheiben
Dispositif d'équilibrage dynamique d'une masse en rotation, en particulier pour meules de rectification

(30) Priority: 20.07.1989 IT 2124789
(43) Date of publication of application: 23.01.1991
(73) Proprietor: BALANCE SYSTEMS S.r.l., I-20124 Milan (IT)
(72) Inventor: Trionfetti, Gianni, I-20041 Agrate Brianza (Milano) (IT)
(74) Representative: Lunati, Vittoriano

(56) References cited:
- US-A- 3 827 193
- Derwent's abstract, No. 84-293584, SU 1083083 KHARK PRECISION LAT

## Description

This invention has for its subject-matter a rotating mass dynamic balancing device, in particular for grinding wheels, defined in the preamble of the accompanying Claim 1. Such a device is known, for example, from US-A- 3827 193.

As it is known, to balance the grinding wheels and other rotating masses that do not allow vibrations during the rotation, a vibration transducer, suitable for surveying the vibrations caused by unbalances and for emitting corresponding signals of electric type, an electronic apparatus that processes the signals received by the transducer generating driving signals at output, and a balancing device or balancing head controlled by the above mentioned driving signals are normally used.

The balancing device or balancing head can be mounted, in the case e.g. of balancing of a grinding wheel, internally to the grinding wheel holder-spindle, or externally onto the grinding wheel holder-flange, according to the dimensions of the balancing head.

The balancing head reduces or annuls the unbalances changing the position, with respect to the rotation axle, of suitable compensation masses that can be defined by liquid quantities introduced or ejected from proper chambers of the same balancing head or by metallic unbalanced masses and that can be moved, e.g. by means of electric motors.

The liquid balancing heads, more than showing dimensions that make impossible their encasing in the inside of the spindle, are generally subjet to scale formation, e.g. of calcareous type in the case of use of water as liquid, and to external influences due for example to uncontrolled jets of refrigerant liquids.

Therefore these balancing heads show a not always satisfactory running reliability and further they are very expensive.

The balancing devices or balancing heads, including in their inside compensation masses formed by unbalanced metallic masses, show drawbacks due to the configuration and positioning of the same metallic masses.

These last masses are normally located side-by-side and following with on another along the rotation axle of the mass to be balanced.

The positioning of the compensation masses allows to obtain, on the whole, a resultant force that annuls the centrifugal force due to mass to be balanced. Yet it is in any case always present a dynamic unbalance caused by the' moment not equal to zero of the compensation forces, said resultant force being generated by the sum of these compensation forces.

In fact the same balancing head becomes a cause of a dynamic unbalance that cannot be annulled in any case, as the compensation masses formed by the above mentioned metallic masses, whatever is the angular position assumed therefrom, cause centrifugal forces laying in parallel and spaced planes, and therefore cause also an unbalance moment.

Although the dynamic unbalance is mechanically well tolerated by the spindles, it causes, for example, quality limits of the grinding made by means of abrasive wheels, above all in the case of high rotation speeds.

Same attempts were made to obviate to this drawback.

It is known to provide balancing heads having compensation metallic masses that are moved, for obtaining the balancing, the one within the other.

In this manner the dynamic unbalance is eliminated, but this technical solution causes complex structures and wide dimensions, in particular in radial direction. Further the balancing capacities are limited owing to the reduced balancing forces that are used.

US-A-3827193 discloses a positioning of the balancing device or head in the inside of the rotating mass to be balanced, onto the axle thereof.

This position is very suitable as only in this manner it is avoided that the device with its own presence and independently from its internal structure causes a dynamic unbalance, due to a resultant balancing force shifted with respect to the centrifugal force of the mass to be balanced.

However, even when the balancing device is placed inside the rotating mass, it does exist a dynamic unbalance if the compensation masses of the balancing device are located side-by-side, as in US-A-3827193.

The insertion of the balancing head in the inside of the mass to be balanced is possible only if the balancing head has reduced dimensions in radial direction.

A solution to reduce the dynamic unbalance also when the balancing device has wide dimensions and is placed out of the rotating mass, is disclosed in SU 1083083.

According to this patent, the compensation masses have compensation barycenters laying all in the same barycentric plane, orthogonal to the central axle of the balancing device.

The compensation masses are close to the rotating mass to balance, and have a short lenght and a large radial dimension, but the balancing device of SU 1083083 with its own presence causes a dynamic unbalance, being displaced with respect to the rotating mass.

In this situation the technical scope of the present invention is to supply a rotating mass dynamic balancing device suitable for substantially obviating to the above mentioned drawbacks and exempt from internal dynamic unbalances, showing radial dimensions limited with respect to its length, suitable for applying also high balancing forces, and having a simple structure.

The technical aim is substantially achieved by a rotating mass dynamic balancing device, in particular for grinding wheels, as claimed in Claim 1.

The invention shall appear better in the description of a preferred fulfilment form of a dynamic balancing device according to the invention, shown in the annexed drawings, in which:
**Figure 1** shows in lateral view, partially in view and partially in longitudinal section, the device according to the invention, showing also electric feeding members of the device;
**Figure 2** shows the section II-II of Figure 1;
**Figure 3** shows the section III-III of Figure 1;
**Figure 4** shows a possible application of the device according to the invention, in conjuction with a grinding wheel.

Making reference to the above mentioned figures, the device is indicated by the reference number **1**.

It includes a support body **2**, made up of a couple of end parts **3a**, **3b**, cylindrical in form and establishing the ends and the maximum dimension in radial direction of the device 1, and of a central part **3c**, elongated and substantially tubolar in form, interposed coaxially between the end parts 3a, 3b.

Intermediate roller bearings **4** and end driving rings **5a** and **5b** and intermediate support rings **6a** and **6b** are rotatably engaged around the above mentioned central part 3c.

Two compensation masses **7a** and **7b** are respectively engaged onto the rings 5a and 6a and onto the rings 5b and 6b.

The compensation masses 7a, 7b are equal and positioned at equal distance from a central axle **8**, defining the longitudinal symmetry axle of the support body 2, coincinding with the rotation axle of a rotating mass to be balanced, for example, formed by a grinding wheel **9**.

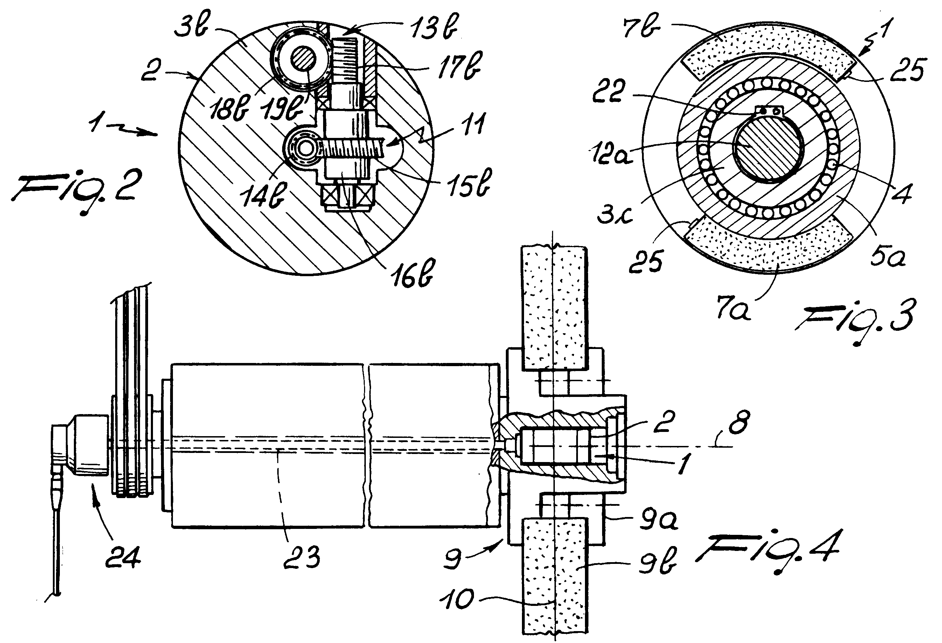

The Figure 4 shows that the device 1 is engaged in the inside of a central support **9a** of the grinding wheel 9, whose abrasive part is indicated by **9b**.

The compensation masses 7a, 7b have compensation barycenters equally spaced from the central axle 8 and laying onto a same barycentric plane **10** orthogonal to the central axle 8 and coincident with the mean plane both of the support body 2 and grinding wheel 9.

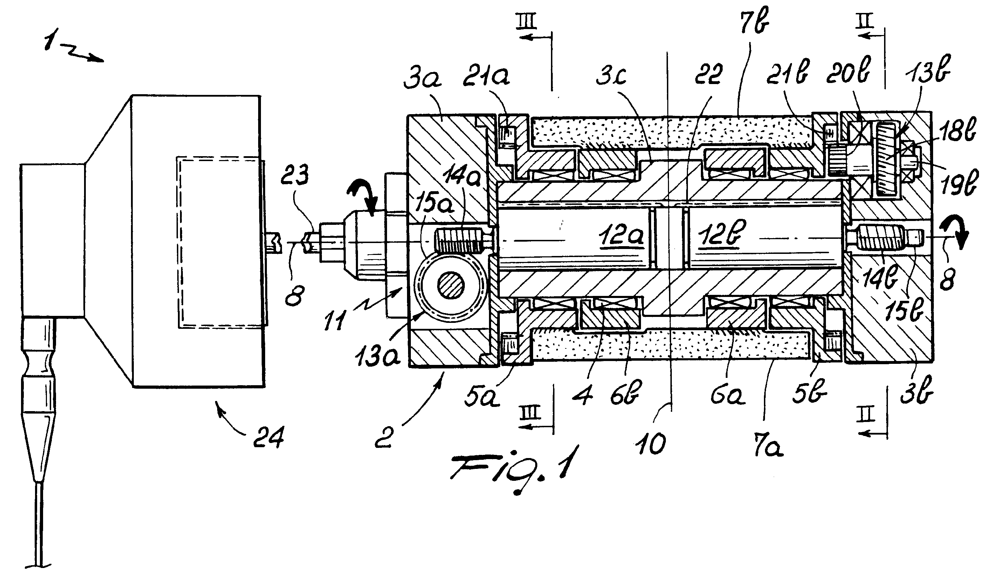

As it is shown in the Figures 1 and 3, the compensation masses 7a, 7b show a main development direction, longitudinal and parallel to the entral axle 8.

Each one of the compensation masses 7a, 7b engages parts angularly differentiated with respect to the central axle 8, in a section orthogonal to the central axle 8. In particular it is foreseen a shape substantially in the form of a circular crown extended by an angle lower than, but near to 90°.

As shown in the figures 1, 3 and 4, the compensation masses 7a, 7b have an external radial dimension close to the maximum radial dimension of the end parts 3a, 3b and no element is interposed between the compensation masses and the rotating mass to balance, as disclosed in figure 4.

For moving the compensation masses 7a, 7b, there is a driving means **11**. The driving means 11 causes a movement of said compensation masses 7a, 7b, between balancing positions in which said masses are diametrally opposed towards one another with respect to central axle, and positions of maximum unbalance in which the compensation masses 7a, 7b are contiguous with one another. Various intermediate unbalanced work positions exist between these end positions.

In detail, the driving means 11 includes, in addition to the above mentioned driving rings 5a, 5b, two drive members formed by reversible electric motors **12a**, **12b**, developing along the central axle 8 in the inside of the central part 3c of the support body 2. Each drive member is suitable for handling a corresponding compensation mass.

Further the drive means 11 includes transmission elements **13a**, **13b** located between the electric motors 12a, 12b and the driving rings 5a and 5b.

The transmission elements 13a are inserted into the end part 3a of the support body 2 and are located between the electric motor 12a and the driving ring 5a for moving the compensation mass 7a.

The transmission elements 13b, the electric motor 12b and the driving ring 5b are equal to the corresponding members indicated by 'a', but are preset for moving the compensation mass 7b and are positioned in conjuction with the end part 3b.

As indicated in Figures 1 and 2, the transmission elements 13a and 13b are of mechanical type and are formed substantially by gearings showing couplings between gears and worm screws.

In detail, there are first worm screws **14a**, **14b**, coaxial respectively to the electric motors 12a, 12b and meshed respectively with first gears 15a, 15b.

The first gears **15a**, **15b** are keyed respectively onto shafts **16a**, **16b** that are located transversally to the central axle 8 and housed respectively within the end parts 3a, 3b. Said first shafts end with second worm screws **17a**, **17b**, engaging the second gears **18a**, **18b**.

Starting from the second gears 18a, 18b there are second shafts **19a** and **19b**, respectively, parallel to the central axle 8 and ending with sprockets **20a**, **20b** respectively meshing with internal gears **21a**, **21b**, respectively joined with the driving rings 5a, 5b.

The Figures 1, 3, 4 show that for feeding the electric motors 12a, 12b, electric cables **22** are arranged joined to a main cable **23** on its turn joined to a brush collector **24**.

The Figure 3 shows also schematically sensors 25 installed in conjuction with the compensation masses 7a and 7b, suitable for surveying the contact between these last masses and for transmitting a stop signal to the electric motors 12a, 12b.

The running of the device 1 occurs as follows.

Before all, the device 1 is associated coaxially to a rotating mass for example the grinding wheel 9, and preferably it is housed internally to the same rotating mass for being positioned with its barycentric plane 10 coinciding with the mean plane of the rotating mass to be balanced.

If the rotating mass 9 is already balanced, the compensation masses 7a and 7b remain located diametrally opposed with one another with respect to the central axle 8.

The centrifugal forces both of the compensation masses 7a and 7b and the rotating mass are located in the same plane and therefore have a resultant force and moment equal to zero.

If, as generally occurs, the rotating mass 9 has an unbalance, the driving means 11 receives suitable signals that, by means of drive members 12a, 12b, by means of transmission elements 13a and 13b and by means of driving rings 5a, 5b, cause the compensation masses 7a and 7b to rotate towards the work unbalanced position.

When the compensation masses 7a and 7b are located in the suitable work position, they generate a resultant centrifugal force proper for annulling the unbalancing of the rotating mass.

The maximum angular rotation of the compensation masses can reach a value suitable for allowing the recipocal contact of the same compensation masses and in this case the sensors 25 lock the electric motors 12a and 12b in the approaching direction of the same compensation masses, avoiding in this manner dangerous overheatings.

If the device 1 cannot be located in the inside of the rotating mass to be balanced, the centrifugal forces caused by the device 1 and by the same rotating mass being not onto the same plane, cause a moment that is different from zero. Yet the position of the compensation masses 7a, 7b remains characterized by the coincidence of the compensation barycenters to the same barycentric plane and therefore the device 1 is suitable for not adding its own unbalance moment to the moment necessarily present in this external positioning type.

The invention achieves important advantages.

In fact the device is perfectly balanced, but further its structure is simple and shows the capacity of correcting also high unbalances when the compensation masses are located faced with one another. Further the device has a minimum radial dimension and it exists the possibility of arranging more or less heavy compensation masses without increasing the overall dimensions of the same device in the radial direction, changing the longitudinal dimensions.

Further the construction of the balancing device is simple, as the compensation masses, being located at equal distance from the central axle 8, can be made perfectly equal with one another.

## Claims

1. A rotating mass dynamic balancing device, in particular for grinding wheels, and to be inserted within said rotating mass, including: a support body (2) having a central axle (8), at least a couple of compensation masses (7a, 7b) engaged onto said support body (2) and mobile with respect to the same support body (2), and driving means (11) suitable for handling said compensation masses (7a, 7b),
- said compensation masses (7a, 7b) having a development direction parallel to said central axle (8) and a section, perpendicularly to said development direction, engaging a part of space angularly limited with respect to said central axle (8),
- and said driving means (11) being suitable for translating each of said compensation masses (7a, 7b) in angular direction with respect to said central axle (8), starting from balancing positions, in which said compensation masses (7a, 7b) are diametrally opposed with one another with respect to said central axle (8),
- characterized in that:
- said support body (2) includes coaxial end parts (3a, 3b) establishing zones of maximum radial dimensions of said device, in a direction transversal to said central axle (8), and a central part (3c) interposed coaxially between said end parts (3a, 3b),
- and in that each of said compensation masses (7a, 7b) is rotatably supported by said central part (3c) and is flanked by said end parts (3a, 3b),
- said compensation masses (7a, 7b) having compensation barycenters laying all in a same barycentric plane (10) orthogonal to said central axle (8), being radially interposed between said central part (3c) and said rotating mass (9), and having a maximum radial dimension close to said maximum radial dimensions of said end parts (3a, 3b).

2. A device according to Claim 1, in which said driving means (11) includes drive members (12a, 12b) housed in said central part (3c) and substantially aligned along said central axle (8), driving rings (5a, 5b) rotatably mounted onto said support body (2) and joined to said compensation masses (7a, 7b), and transmission elements (13a, 13b) housed in said end parts (3a, 3b) and joining said drive members (12a, 12b) to said driving rings (5a, 5b), each of said compensation masses (7a, 7b) being associated to own driving means (11).

3. A device according to Claim 2, in which said transmission means (13a, 13b) is made up of gearings including couplings among gears (15, 18) and worm screw gears (14, 17), said transmission elements (13a, 13b) having in conjuction with said driving rings (5a, 5b) some sprockets (20) engaging internal gears (21) joined and coaxial to said driving rings (5a, 5b).

4. A device according to Claim 2, in which said driving means (11) includes further sensors (25), located in conjuction with said compensation masses (7a, 7b) and suitable for surveying the contacts between these last masses.

5. A device according to Claim 1, in which said barycentric plane (10) is a mean plane of said support body (2).

## Patentansprüche

1. Dynamische Auswuchtvorrichtung für eine sich drehende Masse, vor allem für Schleifscheiben, die in die sich drehende Masse eingeführt werden soll, mit: einem Stützgehäuse (2), das eine zentrale Achse (8) aufweist, zumindest einem Paar von Ausgleichsmassen (7a, 7b), die mit dem Stützgehäuse (2) in Eingriff stehen und hinsichtlich dieses Stützgehäuses (2) beweglich sind, und Antriebseinrichtungen (11), die für die Handhabung der Ausgleichsmassen (7a, 7b) geeignet sind,
- wobei die Ausgleichsmassen (7a, 7b) eine Entwicklungsrichtung parallel zu der zentralen Achse (8) und einen Abschnitt senkrecht zu der Entwicklungsrichtung aufweisen, der mit einem Teil des Raumes in Eingriff steht, der hinsichtlich der zentralen Achse (8) winkelförmig begrenzt ist,
- und wobei die Antriebseinrichtung (11) dazu geeignet ist, jede dieser Ausgleichsmassen (7a, 7b) in Winkelrichtung hinsichtlich der zentralen Achse (8) ausgehend von den Auswuchtpositionen zu verschieben, in denen die Ausgleichsmassen (7a, 7b) hinsichtlich der zentralen Achse (8) diametral entgegengesetzt zueinander liegen,
- dadurch gekennzeichnet, daß:
- das Stützgehäuse (2) koaxiale Endabschnitte (3a, 3b), die Zonen maximaler radialer Abmessungen der Vorrichtung in einer Richtung transversal zu der zentralen Achse (8) bilden, und einen zentralen Abschnitt (3c) umfaßt, der sich koaxial zwischen den Endabschnitten (3a, 3b) befindet,
- und daß jede dieser Ausgleichsmassen (7a, 7b) drehbar von dem zentralen Abschnitt (3c) gehalten wird und von den Endabschnitten (3a, 3b) flankiert wird,
- wobei die Ausgleichsmassen (7a, 7b) Ausgleichsmassenmittelpunkte aufweisen, die alle in einer gleichen Schwerpunktsebene (10) orthogonal zu der zentralen Achse (8) liegen, sich radial zwischen dem mittleren Abschnitt (3c) und der sich drehenden Masse (9) befinden, und eine maximale radiale Abmessung aufweisen, die nahe den maximalen radialen Abmessungen der Endabschnitte (3a, 3b) liegt.

2. Vorrichtung nach Anspruch 1, bei der die Antriebseinrichtung (11) Antriebselemente (12a, 12b) umfaßt, die in dem zentralen Abschnitt (3c) untergebracht sind und im wesentlichen entlang der zentralen Achse (8) ausgerichtet sind, wobei Antriebsringe (5a, 5b) drehbar auf dem Stützgehäuse (2) gelagert und mit den Ausgleichsmassen (7a, 7b) verbunden sind, und Übertragungselemente (13a, 13b) in den Endabschnitten (3a, 3b) untergebracht sind und die Antriebselemente (12a, 12b) mit den Antriebsringen (5a, 5b) verbinden, wobei jede der Ausgleichsmassen (7a, 7b) eigenen Antriebseinrichtungen (11) zugeordnet ist.

3. Vorrichtung nach Anspruch 2, bei der die Übertragungseinrichtung (13a, 13b) aus Zahnradantrieben aufgebaut ist, die Kupplungen zwischen Zahnrädern (15, 18) und Schnekkenschraubengetrieben (14, 17) umfassen, wobei die Übertragungselemente (13a, 13b) zusammen mit den Antriebsringen (5a, 5b) einige Zähne (20) aufweisen, die in Innenzahnräder (21) eingreifen, die koaxial zu den Antriebsringen (5a, 5b) sind und damit verbunden sind.

4. Vorrichtung nach Anspruch 2, bei der die Antriebseinrichtung (11) außerdem Sensoren (25) umfaßt, die sich in Verbindung mit den Ausgleichsmassen (7a, 7b) befinden und dazu geeignet sind, die Kontakte zwischen den zuletzt genannten Massen zu überwachen.

5. Vorrichtung nach Anspruch 1, bei der die Schwerpunktsebene (10) eine mittlere Ebene des Stützgehäuses (2) ist.

## Revendications

1. Dispositif d'équilibrage dynamique d'une masse en rotation, en particulier pour meules de rectification, et destiné à être inséré dans ladite masse en rotation, comprenant : un corps de support (2) comportant un axe central (8), au moins un couple de masses de compensation (7a, 7b) engagées sur ledit corps de support (2) et mobiles relativement au même corps de support (2, et un moyen d'entraînement (11) adapté à manipuler lesdites masses de compensation (7a, 7b),
- lesdites masses de compensation (7a, 7b) comportant une direction de développement parallèle audit axe central (8) et une section, perpendiculairement à ladite direction de développement, engageant une partie de l'espace limité angulairement par rapport audit axe central (8),
- et ledit moyen d'entraînement (11) étant adapté à imprimer un mouvement de translation à chacune desdites masses de compensation (7a, 7b) dans une direction angulaire relativement audit axe central (8), en partant des positions d'équilibrage, dans lesquelles lesdites masses de compensation (7a, 7b) sont diamétralement opposées l'une à l'autre relativement audit axe central (8),
- caractérisé en ce que :
- ledit corps de support (2) comprend des pièces d'extrémité auxiliaires (3a, 3b) créant des zones de dimensions radiales maximales dudit dispositif, dans une direction transversale audit axe central (8), et une pièce centrale (3c) disposée coaxialement entre lesdites pièces d'extrémité (3a, 3b),
- et en ce que chacune desdites masses de compensation (7a, 7b) est supportée à rotation par ladite pièce centrale (3c) et est flanquée desdites pièces d'extrémité (3a, 3b),
- lesdites masses de compensation (7a, 7b) comportant des barycentres de compensation se situant tous dans un même plan barycentrique (10) perpendiculaire audit axe central (8), étant disposées radialement entre ladite pièce centrale (3c) et ladite masse en rotation (9), et ayant une dimension radiale maximale proche desdites dimensions radiales maximales desdites pièces d'extrémité (3a, 3b).

2. Dispositif selon la revendication 1, dans lequel ledit moyen d'entraînement (11) comprend des éléments d'entraînement (12a, 12b) logés dans ladite pièce centrale (3c) et sensiblement alignés le long dudit axe central (8), des anneaux d'entraînement (5a, 5b) montés à rotation sur ledit corps de support (2) et reliés auxdites masses de compensation (7a, 7b), et des éléments de transmission (13a, 13b) logés dans lesdites pièces d'extrémité (3a, 3b) et reliant lesdits éléments d'entraînement (12a, 12b) auxdits anneaux d'entraînement (5a, 5b), chacune desdites masses de compensation (7a, 7b) étant associée à un moyen d'entraînement (11) propre.

3. Dispositif selon la revendication 2, dans lequel lesdits éléments de transmission (13a, 13b) sont faits d'engrenages comprenant des accouplements parmi des roues (15, 18) et des transmissions à vis sans fin (14, 17), lesdits éléments de transmission (13a, 13b) comportant conjointement auxdits anneaux d'entraînement (5a, 5b) certains pignons (20) engageant des roues internes (21) reliés auxdits anneaux d'entraînement (5a, 5b) et dans le même axe que ceux-ci.

4. Dispositif selon la revendication 2, dans lequel ledit moyen d'entraînement (11) comprend en outre des capteurs (25), situés avec lesdites masses de compensation (7a, 7b) et adaptés à contrôler les contacts entre lesdites masses.

5. Dispositif selon la revendication 1, dans lequel ledit plan barycentrique (10) est un plan moyen dudit corps de support (2).
